# EUROPEAN PATENT SPECIFICATION

(11) **EP 4 332 455 B1**
(45) Date of publication and mention of the grant of the patent: **16.07.2025**
(21) Application number: 23193526.3
(22) Date of filing: 25.08.2023
(51) Int. Cl.: F24H 1/10, F24H 9/00, H05B 3/00, F24H 9/1818, H05B 3/36

(54) **FLOW-THROUGH HEATER**
DURCHLAUFERHITZER
DISPOSITIF DE CHAUFFAGE À ÉCOULEMENT CONTINU

(30) Priority: 26.08.2022 US 202217896444
(43) Date of publication of application: 06.03.2024
(73) Proprietor: Watlow Electric Manufacturing Company, St. Louis, MO 63146 (US)
(72) Inventor: MICHELSEN, Julian, Landshut, 84028 (DE); BROOKE, Todd, Columbia, MO 6520 (US); COLHOUR, Terry, Fulton, MO 65251 (US)
(74) Representative: Germain Maureau

(56) References cited:
- WO-A1-2021/083947
- WO-A1-2021/240495
- GB-A- 144 569
- US-A1- 2021 148 603

## Description

### FIELD

The present invention relates to flow-through heaters, and more particularly to heaters for use heating a fluid flow within such heaters.

### BACKGROUND

Documents WO 2021/083947 A1, WO 2021/240495 A1, US 2021/148603 A1 and GB 144 569 A disclose a flow-through heater assembly. The statements in this section merely provide background information related to the present invention and may not constitute prior art.

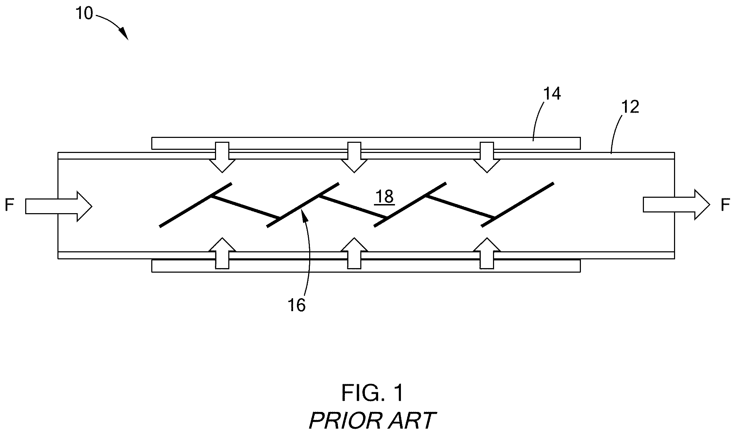

Referring to FIG. 1, a typical flow-through heater assembly 10 includes a tubular flow body 12, an external heater 14 installed onto the outside of the tubular flow body 12, and a baffle 16 located within a flow path "F" within the tubular flow body 12. Heat is transferred from the external heater 14 through the tubular flow body 12 and into a fluid 18 flowing therein. The baffle 16 is designed to increase the turbulence of the fluid 18 and thus increase the heat transfer efficiency between an inner surface of the tubular flow body 12 and the fluid 18.

With this conventional design, the external heater 14 provides advantages in terms of electrical integration, chemical compatibility, and cleanliness of a given application, such as by way of example semiconductor processing environments (e.g., forelines and exhaust lines). However, these existing flow-through heater assemblies are difficult to maintain when, for example, the internal baffle 16 or interior of the tubular flow body 12 needs to be cleaned or serviced. Additionally, thermal transfer from the external heater 14, through the wall of the tubular flow body 12, and ultimately into the fluid 18 is relatively inefficient.

These issues related to flow-through heaters are addressed by the present invention.

### SUMMARY

This section provides a general summary of the invention and is not a comprehensive disclosure of its full scope or all of its features.

In one form of the present invention, a flow-through heater assembly comprises a housing having an inlet, an outlet, and a bore extending between the inlet and the outlet. A heater is disposed within the housing and extends between the inlet and the outlet, the heater comprising at least one opening proximate the inlet and at least one opening proximate the outlet, the heater further defining an anfractuous path from the inlet to the outlet. The openings in the heater are in fluid communication with the bore of the housing.

In variations of this flow-through heater assembly, which may be implemented individually or in any combination: the housing comprises two pieces; the two pieces comprise an upper body half and a lower body half, each of the upper body half and the lower body half comprising adjacent perimeter edges following the anfractuous path; each of the adjacent perimeter edges comprise a circuitous groove and the flow-through heater further comprises an upper o-ring disposed within the circuitous groove of the upper body half and a lower o-ring disposed within the circuitous groove of the lower body half; the heater is disposed against the upper o-ring and the lower o-ring; the upper body half and the lower body half are secured together with mechanical fasteners; the mechanical fasteners extend through the heater; each of the upper body half and the lower body half comprise one of the inlet and the outlet; the upper body half and the lower body half are identical in shape; the heater further comprises integral termination pads; the integral termination pads extend laterally from a mid-section of the heater and through a sidewall of the housing; the housing comprises internal grooves configured to receive the heater, the internal grooves following the anfractuous path of the heater; the anfractuous path defines a sine-wave shape; a plurality of heaters extend between the inlet and the outlet; the heater comprises a variable watt density; the heater comprises a material having a sufficient TCR such that the heater functions as a heater and a temperature sensor; at least one temperature sensor is disposed within the housing; the temperature sensor comprises a ribbon extending along a surface of the heater with a junction disposed at a predetermined location; the heater is selected from the group consisting of a polyimide heater, a layered heater, a heat trace heater, a tubular heater, a cartridge heater, and a cable heater; and the flow-through heater assembly is formed by an additive manufacturing process.

In another form of the present invention, a flow-through heater assembly comprises a two-piece housing comprising an inlet, an outlet, and a bore extending between the inlet and the outlet. A heater is disposed within the two-piece housing and extending between the inlet and the outlet, the heater comprising at least one opening proximate the inlet and at least one opening proximate the outlet, the heater further defining an anfractuous path from the inlet to the outlet, wherein the openings in the heater are in fluid communication with the bore of the housing.

In yet another form of the present invention, a flow-through heater assembly comprises a two-piece housing comprising an inlet, an outlet, and a bore extending between the inlet and the outlet, the two-piece housing defining an upper body half and a lower body half, each of the upper body half and the lower body half comprising adjacent perimeter edges having a circuitous groove. An upper o-ring is disposed within the circuitous groove of the upper body half, a lower o-ring is disposed within the circuitous groove of the lower body half, and a heater is disposed within the two-piece housing and extends between the inlet and the outlet against each of the upper o-ring and the lower o-ring. The heater comprises at least one opening proximate the inlet and at least one opening proximate the outlet, the heater further defining an anfractuous path from the inlet to the outlet. The openings in the heater are in fluid communication with the bore of the housing, and the adjacent perimeter edges of the upper body half and the lower body half follow the anfractuous path of the heater.

In still another form, a flow-through heater assembly comprises a housing having an inlet, an outlet, and a bore extending between the inlet and the outlet. A heater is disposed within the housing and extends between the inlet and the outlet, the heater comprising distal end portions disposed across each of the inlet and the outlet. The heater further defines an anfractuous path from the inlet to the outlet.

Further areas of applicability will become apparent from the description provided herein. It should be understood that the description and specific examples are intended for purposes of illustration only and are not intended to limit the scope of the present invention.

### DRAWINGS

In order that the invention may be well understood, there will now be described various forms thereof, given by way of example, reference being made to the accompanying drawings, in which:
FIG. 1 is a schematic side cross-sectional view of a prior art flow-through heater assembly;
FIG. 2 is a perspective view of a flow-through heater assembly constructed according to the teachings of the present invention;
FIG. 3 is an exploded view of the flow-through heater of FIG. 2;
FIG. 4 is a cross-sectional view of the flow-through heater assembly of FIG. 2;
FIG. 5A is a perspective view of a lower body half of a housing and an o-ring of the heater assembly of FIG. 2 constructed according to the present invention;
FIG. 5B is a perspective view of a heater and another o-ring disposed on the lower body half of FIG. 5A;
FIG. 6 is a perspective view of a flexible polyimide heater constructed according to the present invention;
FIG. 7 is a schematic side cross-sectional view of the flow-through heater assembly of FIG. 2 and a fluid flow according to the present invention; and
FIG. 8 is a side cross-sectional view of another flow-through heater assembly having a plurality of heaters according to the present invention.

The drawings described herein are for illustration purposes only and are not intended to limit the scope of the present invention in any way.

### DETAILED DESCRIPTION

The following description is merely exemplary in nature and is not intended to limit the present invention, application, or uses. It should be understood that throughout the drawings, corresponding reference numerals indicate like or corresponding parts and features.

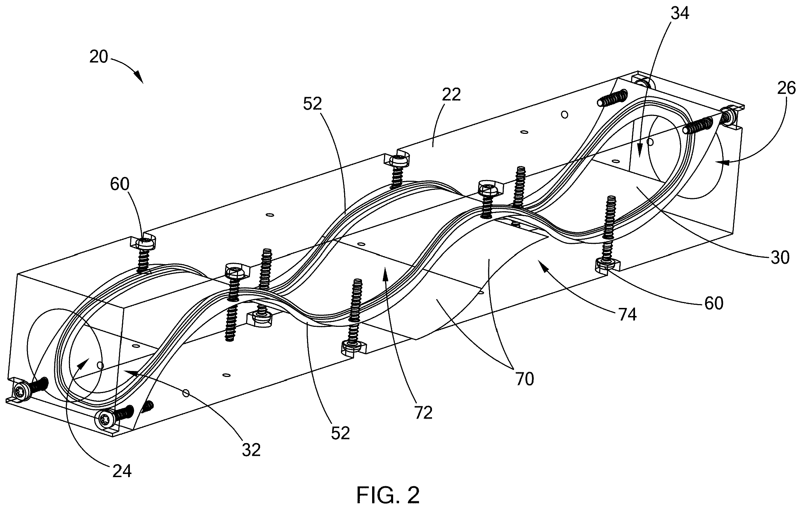

Referring to FIGS. 2 - 4, a flow-through heater assembly according to the present invention is illustrated and generally indicated by reference numeral 20. The flow-through heater assembly 20 includes a housing 22 having an inlet 24, an outlet 26, and a bore 28 extending between the inlet 24 and the outlet 26. The flow-through heater assembly further includes a heater 30 disposed within the housing 22 and extending between the inlet 24 and the outlet 26.

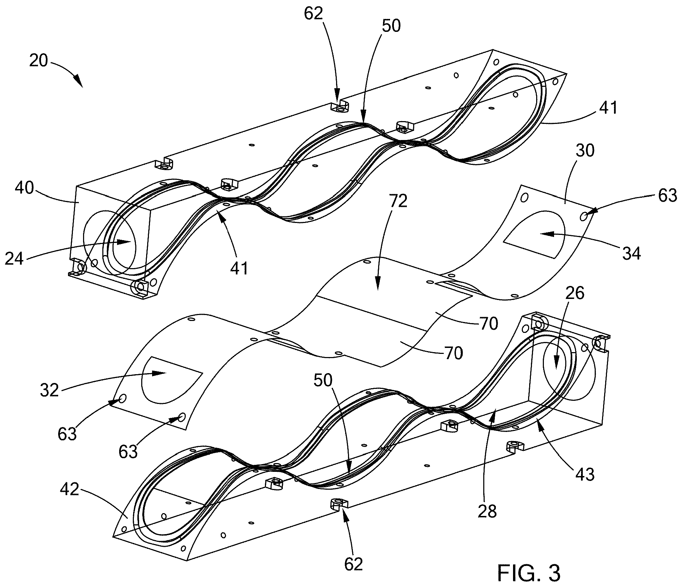

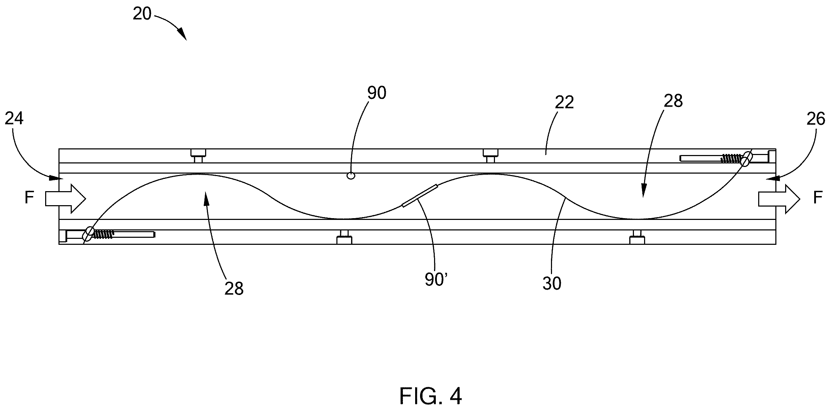

As best shown in FIG. 3, the heater 30 comprises at least one opening 32 proximate the inlet 24 and at least one opening 34 proximate the outlet 26. As described in greater detail below, the heater 30 defines an anfractuous path from the inlet 24 to the outlet 26, and the openings 32 and 34 are in fluid communication with the bore 28 of the housing 22. In operation, fluid generally flows into the inlet 24 and opening 32, through the bore 28 and along the heater 30, and out through the other opening 34 and outlet 26, as indicated by the fluid flow "F" (FIG. 4).

In one alternative form not specifically shown, such as one with a different number of sinuations along the anfractuous path, a first portion of the fluid flow F does not flow through the opening 32 and remains on the one side of the heater 30 before exiting the housing 22 via the outlet 26 while the remainder of the fluid flow F may flow through the opening 32 and remain on the opposite side of the heater 30 before flowing through another opening (i.e., similar to opening 34) proximate the outlet 26 to rejoin the first portion of the fluid flow F to exit through the outlet 26. Alternately, the ends of the heater 30 may be disposed across each of the inlet 24 and the outlet 26 and split the fluid flow F without having openings 32/24. These and other variations of the flow-through heater assembly 20 should be construed as falling within the scope of the present invention.

In one form as shown, the housing 22 includes two pieces, an upper body half 40 and a lower body half 42. Each of the upper body half 40 and the lower body half 42 includes an opening that forms either the inlet 24 or the outlet 26. Advantageously, in one form, the upper body half 40 and the lower body half 42 define the same geometry such that only one unique part number is used for the housing 22 assembly. It should be understood, however, that the housing 22 may be provided as a unitized component (set forth in greater detail below) or in multiple pieces that are not necessarily identical halves while remaining within the scope of the present invention. Additionally, while the exterior profile of the housing 22 is illustrated herein as square, other geometries such as rectangular or circular, among others and combinations thereof, are to be understood as being within the teachings of the present invention.

As shown, the heater 30 defines an anfractuous path from the inlet 24 to the outlet 26. As used herein, the term "anfractuous path" should be construed to mean a curved (but not straight) path that twists and/or turns in multiple directions, such as by way of example an S-shaped or sine-wave shaped path, along which fluid is forced to flow from the inlet 24 to the outlet 26. Thus, with its anfractuous path, the heater 30 is configured to function as a baffle, taking on multiple directions in 3D space. This innovative anfractuous path of the heater 30 increases turbulence of the fluid flow F through the flow-through heater assembly 20, thereby improving heat transfer from the heater 30 to the fluid F. Thus, a desired fluid temperature of the flowing fluid F is reached more readily with less power provided to the heater 30 than an external heater 14 disposed outside the tubular flow body 12 (FIG. 1). It should also be understood that the anfractuous path may be over a portion of the length of the heater 30 and does not have to necessarily extend all the way from the inlet to the outlet while remaining within the scope of the present invention. Further, the anfractuous path may be over a portion of the length of the heater 30, or be arranged in zones along the length of the heater 30, while remaining within the scope of the teachings herein.

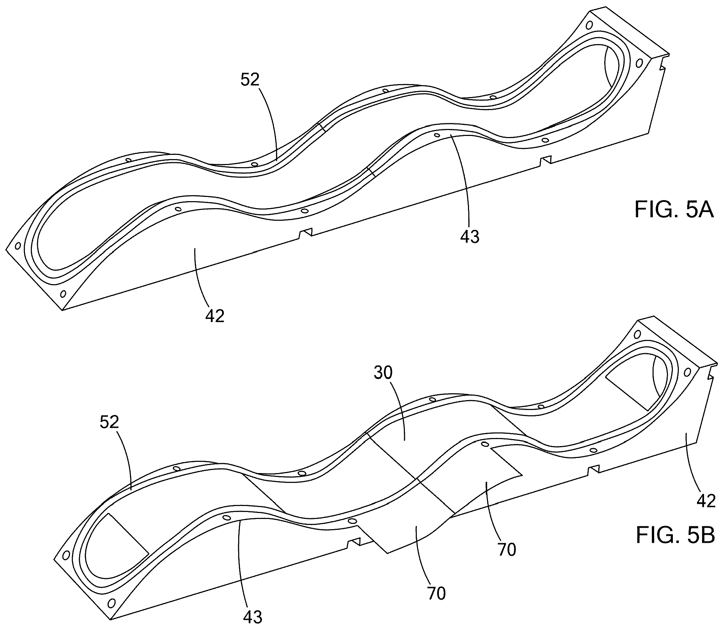

Referring also to FIGS. 5A - 5B, the upper and lower body halves 40, 42 are similarly shaped with an anfractuous interior profile as shown to accommodate assembly with the heater 30. Each of the upper body half 40 and the lower body half 42 include adjacent perimeter surfaces 41/43 following the anfractuous path. More specifically, in this form, both the upper body half 40 and the lower body half 42 include the adjacent perimeter surfaces 41/43 having a circuitous groove 50 (FIG. 3) extending around an interior perimeter as shown. The circuitous grooves 50 are arranged to receive a seal, such as an o-ring 52, to seal an interface between the upper and lower body halves 40/42 and the heater 30. Thus, the heater 30 is disposed against the upper and lower o-rings 52 in this form of the present invention.

In one form, the upper body half 40 is secured to the lower body half 42 by mechanical fasteners 60 (FIG. 2), such by way of example, screws, bolts, and/or dowels, among others, that extend through holes 62 in the upper and lower body halves 40, 42. Tightening the upper and lower body halves 40, 42 together with the mechanical fasteners 60 thus compresses the o-rings 52 to seal the interface between the heater 30 and the upper and lower body halves 40/42 from fluid flow within the housing 22. It should be understood, however, that the upper and lower body halves 40/42 may be secured to each other using other means, such as by way of example, adhesives, welding or mechanical latches, among others, and may include other features such as hinges for ease of maintenance while remaining within the scope of the present invention. Further, in this form, the mechanical fasteners 60 also extend through the heater 30 as shown. Accordingly, the heater 30 includes a plurality of peripheral openings 63 configured to receive the mechanical fasteners 60. It should be understood, however, that these peripheral openings 63 are optional and the heater 30 may be secured between the upper and lower body halves 40/42 by other means.

As further shown, the heater 30 includes integral termination pads 70 extending laterally from a mid-section 72 of the heater 30. The termination pads 70 are configured to receive power leads (shown below) to supply power to the heater 30. In this form, the termination pads 70 extend through a sidewall 74 of the housing 22 where the upper body half 40 meets the lower body half 42. The termination pads 70 in this form are integral with the mid-section 72 of the heater 30. However, it should be understood that the termination pads 70 may be a separate component rather than integral, and/or may exit the housing 22 at a different location besides the mid-section 72 of the heater 30 while remaining within the scope of the present invention.

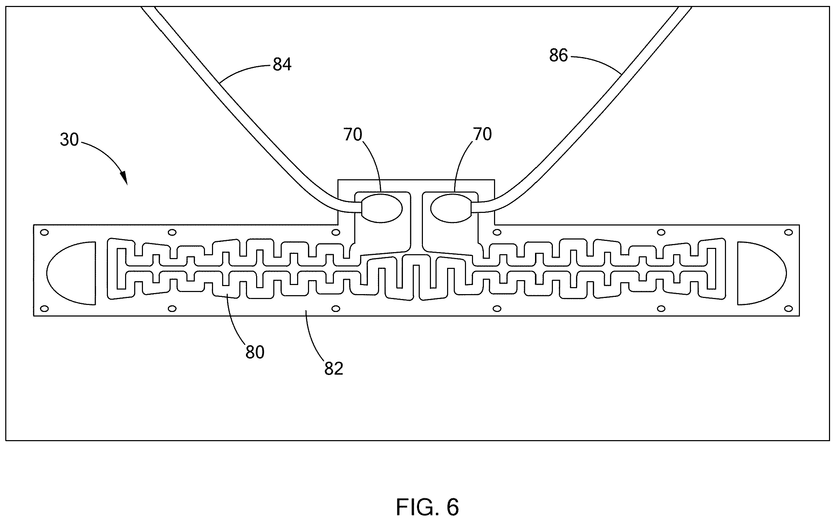

Referring to FIG. 6, one form of the heater 30 and integral termination pads 70 are illustrated in greater detail. In this form, the heater 30 comprises a resistive heating element 80 encapsulated in a polyimide material 82. Power leads 84 and 86 are connected to the termination pads 70, for example by way of soldering. The entire heater 30 in this form is thus flexible, thus allowing it to conform to the shapes of the upper and lower body halves 40/42 during assembly. However, the heater 30 may instead be preformed into the anfractuous shape while remaining within the scope of the present invention.

The heater 30 may be any of a variety of heaters to provide the requisite power to reach a specified fluid temperature. For example, the heater 30 may be a polyimide heater as illustrated and described herein, a layered heater (thick film, thin film, thermal spray, sol-gel), a heat trace, a tubular heater, a cartridge heater, or a cable heater, among others. Further, the heater 30 may comprise a plurality of individual heaters arranged in zones (not shown) rather than a single heating element as shown. An example of such a heater system with a plurality of individual heaters is illustrated and described in U.S. Patent No. 10,247,445, and its related family of patents and applications, which are commonly owned with the present application and are incorporated herein by reference in their entirety.

In another form, the heater 30 has a variable watt density. In this context, a "watt density" is an amount of wattage of power output by the heater 30 per unit area, and a "variable watt density" means that the watt density of at least one portion of the heater 30 differs from the watt density of another portion of the heater 30. Such a variable watt density is illustrated and described in U.S. Patent No. 9,113,501 and its related family of patents and applications, which are commonly owned with the present application and are incorporated herein by reference in their entirety. By way of example, in one form, the watt density of a center portion of the heater 30 is greater than the watt density of an edge portion of the heater 30, increasing heat generated by the center portion relative to the edge portion. The variable watt density of the heater 30 can also be configured to cause thermal gradients in the fluid flow F between the portions of the heater 30 with higher watt densities and lower watt densities, further increasing turbulence of the fluid flow F and thus moving colder fluid toward the portions of the heater 30 with higher watt densities.

In another form, the heater 30 is made of a material having a thermal coefficient of resistance (TCR) sufficient such that the heater 30 functions to heat the fluid and as a temperature sensor to detect the fluid temperature. By measuring the change in electrical resistance of the heater 30, the temperature of the fluid is determined based on the TCR. Thus, sensing the change in electrical resistance of the heater 30 acts as a correlative measure of the fluid temperature, and the heater 30 thus serves a dual function and also acts as a temperature sensor.

Alternatively, or additionally, the flow-through heater assembly 20 includes a temperature sensor 90 (FIG. 4) disposed within the housing 22. In one form, the temperature sensor 90 is a ribbon 90' extending along a surface of the heater 30 with a junction disposed at a predetermined location. The temperature sensor 90/90' detects the fluid temperature at the predetermined location, providing data to determine whether the fluid is heated to a specified temperature prior to exiting the outlet 26. Based on the data, a power controller (not shown) adjusts power to the heater 30 to attain the desired temperature. The temperature sensor 90/90' is a suitable type, such as a thermocouple, a thermistor, or a material with a specified TCR as described above, among others.

In one form, the flow-through heater assembly 20 is formed by an additive manufacturing process, such as by way of example, laser sintering, binder jetting, or sheet lamination. In such processes, layers of material are deposited to form each of the halves of the housing (40/42), as well as the heater 30, including the anfractuous profiles. In one form, metallic powder is deposited onto a substrate and a laser fuses the powder into a solid metal layer. Then, additional metallic powder is deposited onto the solidified layer and fused by the laser into another layer. The fused layers are successively built to form some or all of the components of the flow-through heater assembly 20, thereby eliminating the need for the mechanical fasteners 60 and the seals 52 as illustrated and described above. By using an additive manufacturing process, complex geometries, such as the anfractuous path, can be more easily achieved to improve heating of the fluid in the flow-through heater assembly 20.

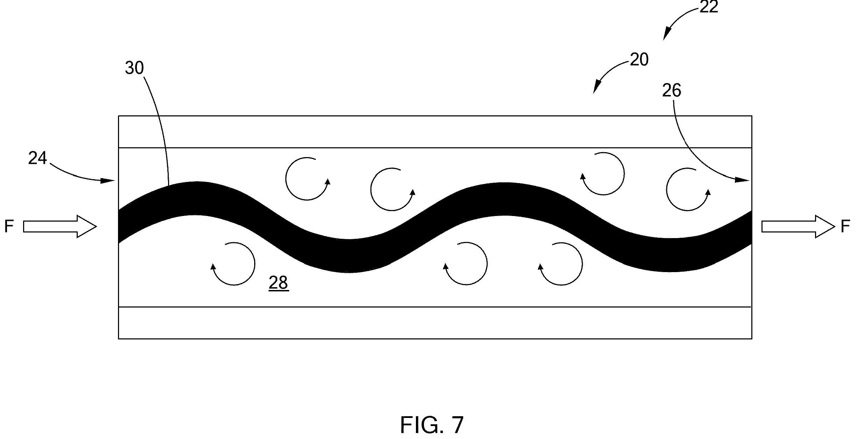

Referring now to FIG. 7, the flow-through heater assembly 20 increases turbulence in fluid F flowing through the bore 28, thus improving heat transfer from the heater 30 to the fluid F. The fluid flows into the inlet 24 of the flow-through heater assembly 20 and contacts the heater 30. Because the path of the heater 30 is anfractuous, the heater 30 more efficiently disrupts the flow of the fluid. The increased turbulence causes more fluid to deflect against the interior surfaces of the housing 22 and to contact the heater 30 directly, transferring heat from the heater 30 to the fluid. Then, the more evenly and efficiently heated fluid exits the flow-through heater assembly 20 through the outlet 26.

The shape of the heater 30, and more specifically its anfractuous path, is predetermined to attain a specified thermal time constant to heat the fluid flowing through the flow-through heater assembly 20. In this context, a "thermal time constant" (or "time constant" herein) is a time for a temperature gradient between a current temperature of the fluid and the temperature of the heater to reach a specified percentage (usually 63.2%) of an initial temperature gradient. The "initial temperature gradient" is defined by a fluid temperature prior to the inlet and the temperature of the heater. A heater with a lower thermal time constant means that the fluid reaches a target temperature faster than a heater with a higher thermal constant. Reducing the thermal time constant of the flow-through heater assembly 20 results in heating the fluid more efficiently than a conventional heater, and by replacing a traditional baffle (which acts as a heat sink) with the heater 30 having the anfractuous path, the thermal time constant is reduced.

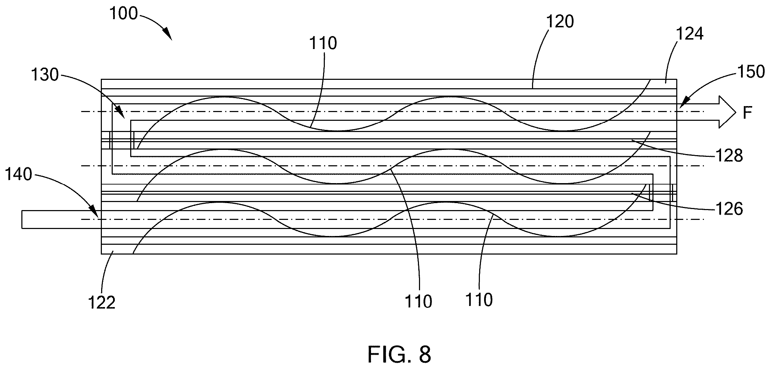

Referring now to FIG. 8, another form of a "stacked" flow-through heater assembly is illustrated and generally indicated by reference numeral 100. The flow-through heater 100 includes a plurality of individual heaters 110 disposed in a multi-chambered housing 120. The housing 120 includes a lower piece 122, an upper piece 124, and two (2) intermediate pieces 126 and 128. A continuous fluid conduit 130 is formed across all pieces in the housing 120 as shown, and the fluid F flows from the lower piece 122 through the intermediate pieces 126 and 128 across and then through the upper piece 124.

The lower piece 122 includes an inlet 140, and the upper piece 124 includes an outlet 150, as described above. Each intermediate piece 126 and 128 includes an opening through which fluid flows from the lower piece 122 to the upper piece 124 or between two adjacent intermediate pieces 126 and 128. The heaters 110 may be connected in electrical series, or each heater 110 may have its own termination pads and power supply as described above. With each heater 110 having its own termination pads, a zoned heater assembly can be provided to provide different amounts of power for each layer of the stack. By stacking the heaters 110 and in the anfractuous path, the flow-through heater assembly 100 provides a longer fluid flow path without increasing a length of the housing 120. It should be understood that two adjacent intermediate pieces 126 and 128 is merely exemplary, and thus one or more than two adjacent intermediate pieces 126 and 128 may be employed while remaining within the scope of the present invention. These and other variations of the innovative flow-through heater assembly should be construed as falling within the scope of the present invention.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present invention. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

## Claims

1. A flow-through heater assembly (20, 100) comprising:
a housing (22, 120) comprising an inlet (24, 140), an outlet (26, 150), and a bore (28, 130) extending between the inlet (24, 140) and the outlet (26, 150); and
a heater (30, 110) disposed within the housing (22, 120) and extending between the inlet (24, 140) and the outlet (26, 150), the heater (30, 110) comprising at least one opening (32) proximate the inlet (24, 140) and at least one opening (34) proximate the outlet (26, 150), the heater further defining an anfractuous path from the inlet (24, 140) to the outlet (26, 150),
wherein the at least one opening (32, 34) in the heater (30, 110) is in fluid communication with the bore (28, 130) of the housing (22, 120), the flow-through heater assembly (20, 100) being **characterized in that**:
the housing (22, 120) comprises a first piece (40, 42, 122, 124, 126, 128) and a second piece (40, 42, 122, 124, 126, 128), each of the first piece (40, 42, 122, 124, 126, 128) and the second piece (40, 42, 122, 124, 126, 128) comprising adjacent perimeter edges following the anfractuous path.

2. The flow-through heater assembly (20) according to Claim 1, wherein the first piece (40) is an upper body half and the second piece (42) is a lower body half.

3. The flow-through heater assembly (20, 100) according to Claim 1, wherein each of the adjacent perimeter edges comprise a circuitous groove (50) and the flow-through heater assembly further comprises an upper o-ring (52) disposed within the circuitous groove of the first piece and a lower o-ring (52) disposed within the circuitous groove (50) of the second piece (40, 42, 122, 124, 126, 128).

4. The flow-through heater assembly (20, 100) according to Claim 3, wherein the heater (30, 110) is disposed against the upper o-ring (52) and the lower o-ring (52).

5. The flow-through heater assembly (20, 100) according to any one of Claims 1, 3 or 4, wherein the first piece (40, 42, 122, 124, 126, 128) and the second piece (40, 42, 122, 124, 126, 128) are secured together with mechanical fasteners (60), wherein the mechanical fasteners (60) extend through the heater (30, 110).

6. The flow-through heater assembly (20, 100) according to any one of Claims 1, 3 or 4, wherein each of the first piece (40, 42, 122, 124, 126, 128) and the second piece (40, 42, 122, 124, 126, 128) comprise one of the inlet and the outlet.

7. The flow-through heater assembly (20, 100) according to Claim 6, wherein the first piece (40, 42, 122, 124, 126, 128) and the second piece (40, 42, 122, 124, 126, 128) are identical in shape.

8. The flow-through heater assembly (20, 100) according to any one of Claims 1, or 3 through 7, wherein the heater (30, 110) further comprises integral termination pads (70), wherein the integral termination pads (70) extend laterally from a mid-section (72) of the heater (20, 100) and through a sidewall (74) of the housing (22, 120).

9. The flow-through heater assembly (20, 100) according to any one of Claims 1, or 3 through 8, wherein the housing (22, 120) comprises internal grooves (50) configured to receive the heater (30, 110), the internal grooves (50) following the anfractuous path of the heater (30, 110).

10. The flow-through heater assembly (20, 100) according to any one of Claims 1, or 3 through 9, wherein the anfractuous path defines a sine-wave shape.

11. The flow-through heater assembly (20, 100) according to Claim 1, further comprising a plurality of heaters (30, 110) extending between the inlet (24, 140) and the outlet (26, 150).

12. The flow-through heater assembly (20, 100) according to any one of Claims 1, or 3 through 11, wherein the heater (30, 110) comprises a variable watt density.

13. The flow-through heater assembly (20, 100) according to any one of Claims 1, or 3 through 12, wherein the heater (30, 110) comprises a material having a sufficient TCR such that the heater functions as a heater and a temperature sensor.

14. The flow-through heater assembly (20, 100) according to any one of Claims 1, or 3 through 12, further comprising at least one temperature sensor (90, 90') disposed within the housing (22, 120), wherein the at least one temperature sensor (90) comprises a ribbon (90') extending along a surface of the heater (30, 110) with a junction disposed at a predetermined location.

## Patentansprüche

1. Durchströmungsheizungsbaugruppe (20, 100), umfassend:
ein Gehäuse (22, 120), umfassend einen Einlass (24, 140), einen Auslass (26, 150) und eine Bohrung (28, 130), die sich zwischen dem Einlass (24, 140) und dem Auslass (26, 150) erstreckt, und
ein Heizelement (30, 110), das innerhalb des Gehäuses (22, 120) angeordnet ist und sich zwischen dem Einlass (24, 140) und dem Auslass (26, 150) erstreckt, wobei das Heizelement (30, 110) mindestens eine Öffnung (32) in der Nähe des Einlasses (24, 140) und mindestens eine Öffnung (34) in der Nähe des Auslasses (26, 150) umfasst, wobei das Heizelement ferner einen abbrechenden Pfad vom Einlass (24, 140) zum Auslass (26, 150) definiert,
wobei die mindestens eine Öffnung (32, 34) in dem Heizelement (30, 110) in Fluidverbindung mit der Bohrung (28, 130) des Gehäuses (22, 120) steht, wobei die Durchströmungsheizungsbaugruppe (20, 100) **dadurch gekennzeichnet ist, dass**:
das Gehäuse (22, 120) ein erstes Teil (40, 42, 122, 124, 126, 128) und ein zweites Teil (40, 42, 122, 124, 126, 128) umfasst, wobei das erste Teil (40, 42, 122, 124, 126, 128) und das zweite Teil (40, 42, 122, 124, 126, 128) jeweils benachbarte Umfangskanten umfassen, die dem abbrechenden Pfad folgen.

2. Durchströmungsheizungsbaugruppe (20) nach Anspruch 1, wobei das erste Teil (40) eine obere Körperhälfte ist und das zweite Teil (42) eine untere Körperhälfte ist.

3. Durchströmungsheizungsbaugruppe (20, 100) nach Anspruch 1, wobei jede der benachbarten Umfangskanten eine sich windende Rille (50) umfasst und die Durchströmungsheizungsbaugruppe ferner einen oberen O-Ring (52) umfasst, der in der sich windenden Rille des ersten Teils angeordnet ist, und einen unteren O-Ring (52), der in der sich windenden Rille (50) des zweiten Teils (40, 42, 122, 124, 126, 128) angeordnet ist.

4. Durchströmungsheizungsbaugruppe (20, 100) nach Anspruch 3, wobei das Heizelement (30, 110) an dem oberen O-Ring (52) und dem unteren O-Ring (52) angeordnet ist.

5. Durchströmungsheizungsbaugruppe (20, 100) nach einem der Ansprüche 1, 3 oder 4, wobei das erste Teil (40, 42, 122, 124, 126, 128) und das zweite Teil (40, 42, 122, 124, 126, 128) zusammen mit mechanischen Befestigungselementen (60) gesichert sind, wobei sich die mechanischen Befestigungselemente (60) durch das Heizelement (30, 110) erstrecken.

6. Durchströmungsheizungsbaugruppe (20, 100) nach einem der Ansprüche 1, 3 oder 4, wobei das erste Teil (40, 42, 122, 124, 126, 128) und das zweite Teil (40, 42, 122, 124, 126, 128) jeweils einen Einlass oder einen Auslass umfassen.

7. Durchströmungsheizungsbaugruppe (20, 100) nach Anspruch 6, wobei das erste Teil (40, 42, 122, 124, 126, 128) und das zweite Teil (40, 42, 122, 124, 126, 128) formgleich sind.

8. Durchströmungsheizungsbaugruppe (20, 100) nach einem der Ansprüche 1 oder 3 bis 7, wobei das Heizelement (30, 110) ferner integrierte Abschlusspads (70) umfasst, wobei sich die integrierten Abschlusspads (70) seitlich von einem Mittelabschnitt (72) des Heizelements (20, 100) und durch eine Seitenwand (74) des Gehäuses (22, 120) erstrecken.

9. Durchströmungsheizungsbaugruppe (20, 100) nach einem der Ansprüche 1 oder 3 bis 8, wobei das Gehäuse (22, 120) innere Rillen (50) umfasst, die so eingerichtet sind, dass sie das Heizelement (30, 110) aufnehmen, wobei die inneren Rillen (50) dem abbrechenden Pfad des Heizelements (30, 110) folgen.

10. Durchströmungsheizungsbaugruppe (20, 100) nach einem der Ansprüche 1 oder 3 bis 9, wobei der abbrechende Pfad eine Sinuswellenform definiert.

11. Durchströmungsheizungsbaugruppe (20, 100) nach Anspruch 1, ferner umfassend eine Vielzahl von Heizelementen (30, 110), die sich zwischen dem Einlass (24, 140) und dem Auslass (26, 150) erstrecken.

12. Durchströmungsheizungsbaugruppe (20, 100) nach einem der Ansprüche 1 oder 3 bis 11, wobei das Heizelement (30, 110) eine variable Wattdichte umfasst.

13. Durchströmungsheizungsbaugruppe (20, 100) nach einem der Ansprüche 1 oder 3 bis 12, wobei das Heizelement (30, 110) ein Material umfasst, das einen ausreichenden TCR aufweist, sodass das Heizelement als Heizelement und Temperatursensor funktioniert.

14. Durchströmungsheizungsbaugruppe (20, 100) nach einem der Ansprüche 1 oder 3 bis 12, ferner umfassend mindestens einen innerhalb des Gehäuses (22, 120) angeordneten Temperatursensor (90, 90') wobei der mindestens eine Temperatursensor (90) ein Band (90') umfasst, das sich entlang einer Oberfläche des Heizelements (30, 110) mit einer an einer vorbestimmten Stelle angeordneten Verbindung erstreckt.

## Revendications

1. Ensemble dispositif de chauffage à écoulement continu (20, 100) comprenant :
un boîtier (22, 120) comprenant une entrée (24, 140), une sortie (26, 150) et un alésage (28, 130) s'étendant entre l'entrée (24, 140) et la sortie (26, 150) ; et
un dispositif de chauffage (30, 110) disposé dans le boîtier (22, 120) et s'étendant entre l'entrée (24, 140) et la sortie (26, 150), le dispositif de chauffage (30, 110) comprenant au moins une ouverture (32) à proximité de l'entrée (24, 140) et au moins une ouverture (34) à proximité de la sortie (26, 150), le dispositif de chauffage définissant en outre un chemin anfractueux de l'entrée (24, 140) à la sortie (26, 150),
dans lequel l'au moins une ouverture (32, 34) dans le dispositif de chauffage (30, 110) est en communication fluidique avec l'alésage (28, 130) du boîtier (22, 120), l'ensemble dispositif de chauffage à écoulement continu (20, 100) étant **caractérisé en ce que** :
le boîtier (22, 120) comprend une première pièce (40, 42, 122, 124, 126, 128) et une seconde pièce (40, 42, 122, 124, 126, 128), chacune de la première pièce (40, 42, 122, 124, 126, 128) et de la seconde pièce (40, 42, 122, 124, 126, 128) comprenant des bords périmétriques adjacents suivant le chemin anfractueux.

2. Ensemble dispositif de chauffage à écoulement continu (20) selon la revendication 1, dans lequel la première pièce (40) est une moitié supérieure du corps et la seconde pièce (42) est une moitié inférieure du corps.

3. Ensemble dispositif de chauffage à écoulement continu (20, 100) selon la revendication 1, dans lequel chacun des bords périmétriques adjacents comprend une rainure sinueuse (50) et l'ensemble dispositif de chauffage à écoulement continu comprend en outre un joint torique supérieur (52) disposé dans la rainure sinueuse de la première pièce et un joint torique inférieur (52) disposé dans la rainure sinueuse (50) de la seconde pièce (40, 42, 122, 124, 126, 128).

4. Ensemble dispositif de chauffage à écoulement continu (20, 100) selon la revendication 3, dans lequel le dispositif de chauffage (30, 110) est disposé contre le joint torique supérieur (52) et le joint torique inférieur (52).

5. Ensemble dispositif de chauffage à écoulement continu (20, 100) selon l'une quelconque des revendications 1, 3 ou 4, dans lequel la première pièce (40, 42, 122, 124, 126, 128) et la seconde pièce (40, 42, 122, 124, 126, 128) sont fixées ensemble avec des attaches mécaniques (60), où les attaches mécaniques (60) s'étendent à travers le dispositif de chauffage (30, 110).

6. Ensemble dispositif de chauffage à écoulement continu (20, 100) selon l'une quelconque des revendications 1, 3 ou 4, dans lequel chacune de la première pièce (40, 42, 122, 124, 126, 128) et de la seconde pièce (40, 42, 122, 124, 126, 128) comprend l'une parmi l'entrée et la sortie.

7. Ensemble dispositif de chauffage à écoulement continu (20, 100) selon la revendication 6, dans lequel la première pièce (40, 42, 122, 124, 126, 128) et la seconde pièce (40, 42, 122, 124, 126, 128) sont de forme identique.

8. Ensemble dispositif de chauffage à écoulement continu (20, 100) selon l'une quelconque des revendications 1, ou 3 à 7, dans lequel le dispositif de chauffage (30, 110) comprend en outre des plaquettes de terminaison intégrées (70), où les plaquettes de terminaison intégrées (70) s'étendent latéralement depuis une section médiane (72) du dispositif de chauffage (20, 100) et à travers une paroi latérale (74) du boîtier (22, 120).

9. Ensemble dispositif de chauffage à écoulement continu (20, 100) selon l'une quelconque des revendications 1, ou 3 à 8, dans lequel le boîtier (22, 120) comprend des rainures internes (50) configurées pour recevoir le dispositif de chauffage (30, 110), les rainures internes (50) suivant le chemin anfractueux du dispositif de chauffage (30, 110).

10. Ensemble dispositif de chauffage à écoulement continu (20, 100) selon l'une quelconque des revendications 1, ou 3 à 9, dans lequel le chemin anfractueux définit une forme d'onde sinusoïdale.

11. Ensemble dispositif de chauffage à écoulement continu (20, 100) selon la revendication 1, comprenant en outre une pluralité de dispositifs de chauffage (30, 110) s'étendant entre l'entrée (24, 140) et la sortie (26, 150).

12. Ensemble dispositif de chauffage à écoulement continu (20, 100) selon l'une quelconque des revendications 1, ou 3 à 11, dans lequel le dispositif de chauffage (30, 110) comprend une densité de watt variable.

13. Ensemble dispositif de chauffage à écoulement continu (20, 100) selon l'une quelconque des revendications 1, ou 3 à 12, dans lequel le dispositif de chauffage (30, 110) comprend un matériau ayant un TCR suffisant de sorte que le dispositif de chauffage fonctionne comme un dispositif de chauffage et un capteur de température.

14. Ensemble dispositif de chauffage à écoulement continu (20, 100) selon l'une quelconque des revendications 1, ou 3 à 12, comprenant en outre au moins un capteur de température (90, 90') disposé dans le boîtier (22, 120), où l'au moins un capteur de température (90) comprend un ruban (90') s'étendant le long d'une surface du dispositif de chauffage (30, 110) avec une jonction disposée à un emplacement prédéterminé.
